# EUROPEAN PATENT APPLICATION

(11) **EP 4 102 327 A1**
(43) Date of publication of application: **14.12.2022**
(21) Application number: 21750827.4
(22) Date of filing: 05.02.2021
(51) Int. Cl.: G05D 1/02, G06T 7/70, G05D 1/00

(54) **POSITION RECOGNITION METHOD AND POSITION RECOGNITION SYSTEM FOR VEHICLE**

(30) Priority: 05.02.2020 KR 20200013532
(71) Applicant: Evar Inc., Gyeonggi-do 13449 (KR); Kim, Seo Hyun, Seoul 05545 (KR)
(72) Inventor: LEE, Hun, Suwon-si Gyeonggi-do 16509 (KR); SHIN, Dong Hyuk, Seongnam-si Gyeonggi-do 13599 (KR); KIM, Ki Jae, Seoul 05809 (KR); KIM, Seo Hyun, Seoul 05545 (KR)
(74) Representative: Frenkel, Matthias Alexander
(86) International application number: PCT/KR2021/001553
(87) International publication number: WO 2021/158062

(57) **Abstract**

The present invention relates to a position recognition method comprising the steps of: measuring a space in a first direction by means of at least one measurement device provided in a vehicle; recognizing a first marker by means of the measurement means; computing first positional information of the vehicle; acquiring map information; and specifying comprehensive positional information of the vehicle, wherein the first marker includes a coordinate value of the first marker, the first positional information is a coordinate value of the vehicle computed through recognition of the first marker, and the step of specifying the comprehensive positional information combines the first positional information of the vehicle with the map information.

## Description

### [Technical Field]

The present invention relates to a position recognition method and a position recognition system for a vehicle, and more specifically, a position recognition method and a position recognition system for a vehicle that are capable of performing autonomous driving and route guidance to a destination by measuring the position and movement direction of a vehicle through marker recognition.

### [Background Art]

With regard to an unmanned autonomous driving system, much research has recently been conducted on autonomous driving, particularly, in fields related to movable devices such as automobiles.

In general, autonomous driving systems use Global Positioning System (GPS) position information and signals obtained from various sensors based on road map information to automatically control driving of an automobile from a starting point to an ending point on the road or assist the driver with driving.

The key to enabling autonomous driving is to identify position information of a vehicle in real time, and to this end, not only GPS but also cameras, radio ranging, and light detection and ranging (LiDAR) are being used experimentally.

However, GPS has a low accuracy due to its wide error range, and raw data measured through a camera, a LiDAR and other configurations is not easy to process due to its large size, and therefore research on a method of estimating the position of a vehicle using the above technologies is actively being conducted worldwide.

In the case of the vehicle position estimation technology disclosed so far and an autonomous driving system using the same, the accuracy is low and the amount of data is very large, and therefore it is difficult to apply the technology to actual autonomous driving, and construction of a high-speed wireless communication infrastructure such as 5G is on hold.

### [Disclosure]

### [Technical Problem]

The present invention has been created to solve the above problems, and it is an object of the invention to provide a position recognition method and a position recognition system for a vehicle that are capable of accurately identifying position information and/or direction information (vector information) of the vehicle with respect to a surrounding space even in an environment in which GPS operation or communication is difficult, and implementing autonomous driving with only a small amount of data.

It is an object of the invention to provide a position recognition method and a position recognition system for a vehicle capable of increasing the accuracy of computed position information and/or direction information (vector information).

The technical objectives of the present invention are not limited to the above, and other objectives that are not described may become apparent to those of ordinary skill in the art based on the following description.

### [Technical Solution]

In order to solve the above problems, an embodiment of the present invention provides a position recognition method including: measuring a space in a first direction through one or more measuring devices provided in a vehicle; recognizing a first marker through the measuring device; computing first position information of the vehicle; obtaining map information; and specifying comprehensive position information of the vehicle, wherein the first marker includes a coordinate value of the first marker, the first position information is a coordinate value of the vehicle computed through the recognizing of the first marker, and the specifying of the comprehensive position information includes combining the first position information of the vehicle with the map information, and having an effect of accurately identifying position information of a vehicle with respect to a surrounding space in an environment in which GPS operation or communication is difficult, and implementing autonomous driving with only a small amount of data.

According to an embodiment of the present invention, the position recognition method provides a position recognition method in which the obtaining of the map information may include: specifying building information; and selecting map information matching the specified building information and which has an effect of smoothly implementing position recognition and autonomous driving by superimposing the position information of the vehicle with the map information.

According to an embodiment of the present invention, there is provided a position recognition method in which the selecting of the map information may include: requesting first map information matching the building information; and receiving the first map information from a server and which has an effect of smoothly implementing autonomous driving by superimposing the position information of the vehicle with the map information.

According to an embodiment of the present invention, there is provided a position recognition method in which the specifying of the building information may include deriving destination information of the vehicle or obtaining address information of a building from the first marker or a second marker and which has an effect of easily obtaining map information.

According to an embodiment of the present invention, the position recognition method provides a position recognition method further including computing vector information of the vehicle, wherein the computing of the vector information may include measuring an amount of change of the first position information to compute first vector information, and having an effect of enhancing autonomous driving by obtaining moving direction information of the vehicle.

According to an embodiment of the present invention, there is provided a position recognition method in which the specifying of the comprehensive position information may include further combining the first vector information of the vehicle with the map information and which has an effect of providing basic data for obtaining the optimal route for an autonomous driving.

According to an embodiment of the present invention, the position recognition method provides a position recognition method further including setting a route of the vehicle, wherein the setting of the route of the vehicle may include setting a movement route of the vehicle based on the comprehensive position information, and having an effect of providing the shortest and optimal route only with minimum data.

According to an embodiment of the present invention, there is provided a position recognition method in which the setting of the route of the vehicle may include: requesting information about a destination; transmitting coordinates of the destination; and computing a shortest route, wherein the transmitting of the coordinates of the destination includes transmitting at least one of coordinate information of the destination and information on a marker closest to the destination and which has an effect of enhancing autonomous driving by accurately specifying destination information.

According to an embodiment of the present invention, the position recognition method provides a position recognition method further including: recognizing a second marker through the measuring device; and computing second position information of the vehicle, wherein the computing of the vector information may include measuring an amount of change of the second position information to compute second vector information and calculating the vector information of the vehicle, and having an effect of not only reducing the error of the coordinate measurement of the vehicle but also increasing the reliability of the computed position information even when a specific marker is damaged.

According to an embodiment of the present invention, there is provided a position recognition method in which the calculating of the vector information may include: comparing the first vector information with the second vector information; and computing average vector information of the first vector information and the second vector information and which has an effect of reducing the error of the moving direction information of the vehicle and increasing the precision.

According to an embodiment of the present invention, there is provided a position recognition method in which the calculating of the vector information may include comparing the first vector information with the second vector information, and when a difference between the first vector information and the second vector information is outside a set error range, comparing third vector information of the vehicle computed from third position information with the first vector information and the second vector information and which has an effect of not only reducing the error of the vector of the vehicle but also increasing the reliability of the computed vector information even when a specific marker is damaged.

According to an embodiment of the present invention, there is provided a position recognition system including: a vehicle provided to be driven automatically or manually; one or more measuring devices provided in the vehicle and configured to recognize a first marker through measurement of a space in a first direction; and a controller, wherein first position information obtained from the first marker is stored in the controller, and the controller generates comprehensive position information that combines the first position information with obtained map information, and having an effect of accurately identifying the position information of the vehicle for a surrounding space even in an environment in which GPS operation or communication is difficult and implementing position recognition and autonomous driving with only a small amount of data.

### [Advantageous Effects]

According to a disclosed embodiment, the present invention has an effect of accurately identifying position information and/or direction information (vector information) of a vehicle with respect to measured surrounding spatial information even in an environment in which GPS operation or communication is difficult and implementing autonomous driving only with low-capacity data by utilizing a marker including position information and a device for detecting the marker.

In addition, an embodiment of the present invention has an effect of increasing the accuracy of computed position information and/or direction information (vector information) by computing and comparing information about each of two or more markers.

In addition, an embodiment of the present invention has an effect of guiding the driver to the optimal and shortest route to the destination or implementing autonomous driving with the optimal and shortest route by utilizing both position information and/or direction information (vector information) of a vehicle.

The effects of the present invention are not limited to the effects described above, and other effects that are not described will be clearly understood by those skilled in the art from the following description.

### [Description of Drawings]

FIGS. 1 to 3 illustrate an example in which a measuring device recognizes a marker according to movement of a vehicle in a specific space.
FIG. 4 exemplarily illustrates the types of markers.
FIG. 5 is a flowchart showing a position recognition method for autonomous driving of a vehicle.
FIG. 6 is a flowchart showing a position recognition method for deriving a position of a vehicle through spatial coordinate information.
FIG. 7 is a flowchart showing a position recognition method for more precisely measuring position information of a vehicle.
FIG. 8 is a flowchart showing a position recognition method for calculating vector information of a vehicle through information computed from a marker.
FIG. 9 is a flowchart showing a position recognition method for more precisely measuring vector information.
FIG. 10 is a flowchart including an operation of setting a vehicle route to a destination based on position information and vector information of the vehicle.
FIG. 11 is a flowchart showing a position recognition method for obtaining destination information.
FIG. 12 is a block diagram illustrating the relationships between respective components.
FIG. 13 is a flowchart showing a position recognition method according to another embodiment of the present invention.
FIG. 14 is a flowchart showing detailed operations for selecting map information.

### [Modes of the Invention]

Hereinafter, the advantages and features of the present invention and ways of achieving them will become readily apparent with reference to the following embodiments described in detail in conjunction with the accompanying drawings. However, the present invention is not limited to such embodiments and may be embodied in various forms. The embodiments to be described below are provided only to make the disclosure of the present invention complete and assist those of ordinary skill in the art in fully understanding the scope of the present invention, and the scope of the present invention is defined only by the appended claims.

Terms used herein are used for describing the embodiments and are not intended to limit the scope and spirit of the present invention. It should be understood that the singular forms "a" and "an" also include the plural forms unless the context clearly dictates otherwise. The terms "comprises," "comprising," "includes," and/or "including," when used herein, specify the presence of stated features, integers, steps, operations, elements, components and/or groups thereof and do not preclude the presence or addition of one or more other features, integers, steps, operations, elements, components, and/or groups thereof. In connection with assigning reference numerals to elements in the drawings, the same reference numerals are used for designating the same elements throughout the specification, and the term "and/or" includes any one or combinations of the associated listed items. It should be understood that, although the terms "first," "second," "third," etc. may be used herein to describe various elements, these elements are not limited by these terms. These terms are only used for distinguishing one element from another. For example, a first element could be termed a second element or a third element without departing from the scope of the present invention.

Unless otherwise defined, all terms (including technical and scientific terms) used herein have the same meanings as commonly understood by those of ordinary skill in the art to which this invention belongs. It should be further understood that terms, such as those defined in commonly used dictionaries, should not be interpreted in an idealized or overly formal sense unless expressly defined herein specifically.

In the embodiments, the term "unit," refers to a software element or a hardware element such as a field-programmable gate array (FPGA), an application-specific integrated circuit (ASIC), etc., and performs a corresponding function. It should, however, be understood that the term "unit" is not limited to a software or hardware element. A "unit" may be implemented in an addressable storage medium. A "unit" may also be configured to reproduce one or more processors. For example, a "unit" may include various types of elements (e.g., software elements, object-oriented software elements, class elements, task elements, etc.), segments (e.g., processes, functions, attributes, procedures, sub-routines, program code, etc.), drivers, firmware, micro-code, circuits, data, databases, data structures, tables, arrays, variables, etc. Functions provided by elements and "units" may be formed by combining them into a smaller number of elements and "units" or may be divided into additional elements and "units."

In the specification, a computer can be any type of hardware device including at least one processor, and may be understood to encompass software configurations operating in the corresponding hardware device according to embodiments. For example, a computer may be understood to be a smart phone, a tablet PC, a desktop, a notebook, a user client, or an application running on any of these devices, but is not limited thereto.

Each operation described in the specification is described as being performed by a specific component or computer, but the agent of each operation is not limited thereto, and at least some of the operations may be performed in different devices according to embodiments.

Hereinafter, embodiments of the present invention will be described in detail with reference to the accompanying drawings.

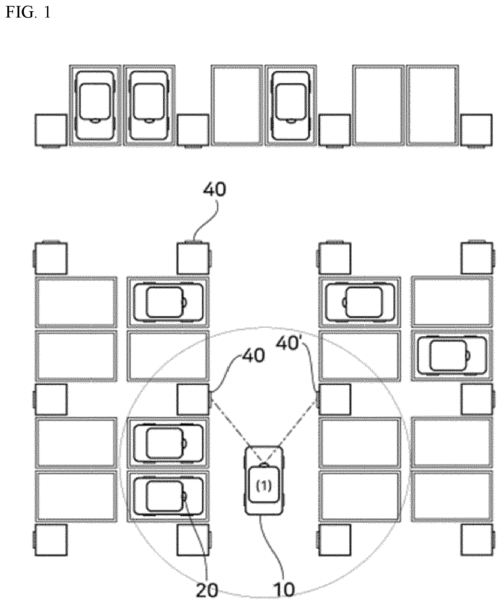

FIGS. 1 to 3 schematically illustrate an example in which position recognition and autonomous driving of a vehicle in a specific space are performed.

The embodiment of the present invention aims at optimal autonomous driving through accurate position recognition in an indoor space of a building, for example, in a limited space, such as an underground parking lot. Such a space as an underground parking lot not only causes difficulty in arrival of Global Positioning System (GPS) signals, but also often forms an incomplete communication environment unless an access point (AP) device is properly installed. That is, the present invention can be mainly applied to a space where it is difficult for GPS signals to arrive, a space with a poor communication environment, or a space with a limited width. However, the present invention is not limited thereto and an embodiment of the present invention may be utilized in an open space.

FIGS. 1 to 3 illustrate an example of a parking space among a large number of spaces. A general parking space has a limited space in a building, has a restriction in arrival of GPS signals, and often fails to have a smooth communication environment. In the following description, the term "parking space" may be interchangeably used with the term "autonomous driving space."

Autonomous driving spaces shown in FIGS. 1 to 3 include a plurality of individual parking areas in which respective cars may be parked and a plurality of pillars. Each of the pillars may be provided with one or more markers 40, and each of the markers 40 may include position information of the corresponding pillar. The position information of the column may be coordinate information of the center point of the column or coordinate information of the center point of the corresponding marker 40.

In the case of the embodiment of the present invention, the markers 40 are formed on the pillars, but the present invention is not limited thereto. For example, the markers 40 may be formed on a floor surface, a ceiling, or peripheral walls of the autonomous driving space. In addition, the markers 40 may be formed in two or more places among the pillars, the floor surface, the ceiling, and the periphery of the autonomous driving space as needed. The key point is that the markers 40 are formed at a specific point in the autonomous driving space, preferably, at a place (a height, etc.) that may be easily recognized when a vehicle such as a car moves.

The plurality of markers 40 may be recognized by a measuring device 20 provided in a vehicle 10 moving in the autonomous driving space. The vehicle 10 may conceptually include all types of movable devices including a car. For example, components such as an electric vehicle charger or a cart may be considered part of the vehicle according to an embodiment of the present invention.

The measuring device 20 includes various devices capable of recognizing the markers 40 and a surrounding space. In the case of the present invention, the measuring device 20 may be a camera or a light detection and ranging (LiDAR) sensor, and may include both a camera and a LiDAR sensor. On the other hand, devices other than the camera and LiDAR may be utilized to implement the present invention as long as they are devices capable of measuring the surrounding space. Depending on the type of the measuring device 20, the type of the markers 40 may also slightly vary, which will be described below.

Meanwhile, the measuring device 20 according to the embodiment of the present invention may be installed inside the vehicle 10. Specifically, when the vehicle 10 is a driving device, such as an automobile, the measuring device 20 may be installed at a position in which a black box is installed inside the vehicle 10, and a camera lens of the black box may be set to function as the measuring device 20. In general, a black box installed in an automobile is installed in the vicinity of a rearview mirror on the inner side a windshield of the automobile. When the black box is provided as two or more black boxes at the front and rear of the car, the measuring device 20 may also be installed in each of the black boxes. However, the measuring device 20 may be installed outside the vehicle 10.

The measuring device 20 is preferably installed in the middle based on the traverse width of the car. When the measuring device 20 includes a camera lens, the position of the lens needs to be located in the middle of the width of the car, and when the measuring device 20 is a LiDAR sensor, the same applies. This is to reduce measurement distortion and accurately compute the center coordinates of the car.

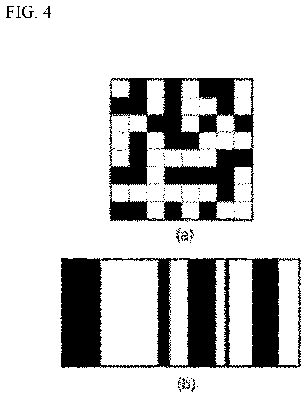

The markers 40 according to the embodiment of the present invention are illustrated in FIG. 4. The markers 40 shown in FIG. 4 are only a few examples of the markers 40 of various shapes. The marker 40 may be provided as a marker including a pattern that may be recognized by a general input device, such as a camera or another component, and/or a reflector formed of a material having high light reflectivity.

A marker including pattern information may be provided as a quick response (QR) code or in a form similar to a QR code. As an example, a form similar to a QR code may include an aruco marker. The aruco marker may be recognized by a camera, and an ID or other information included in the aruco marker may be extracted through analysis of a photo or image information obtained through camera recognition. With regard to the technology using the aruco marker, a large number of research institutes are currently developing an algorithm to increase the accuracy.

On the other hand, the image information of the aruco marker may be analyzed in real time to extract information on x-, y-, and z-axis directions of the aruco marker, and compute distance information with the aruco marker. The markers according to an embodiment of the present invention may also have pattern information, such as that of a QR code or an aruco marker, and in this case, the measuring device 20 may be a device capable of inputting a photo or image information, such as a camera. The pattern information may be in the form shown in FIG. 4A, and may also be provided in the form of a barcode as shown in FIG. 4B according to the amount of information included in each marker.

When the marker 40 is provided as a reflector having high light reflectivity, the marker may be measured by a LiDAR sensor. That is, the measuring device 20 may include a LiDAR sensor. The marker 40 including a reflector may also have a form, such as a QR code or an aruco marker. In addition, the marker 40 including a reflector may be provided in the form of a barcode as shown in FIG. 4B.

When the marker 40 is provided in the form of a barcode as shown in FIG. 4B, the same principle as barcode recognition may be adopted. Meanwhile, coordinate information of the corresponding marker may be computed based on the ratio of the width of a portion in which the reflector is formed to the width of a portion in which the reflector is not formed.

Regardless of the form or material of the marker 40, the key function of the marker 40 is that each marker 40 includes different ID information. The ID information may include unique numbering of the corresponding marker 40, unique coordinate information (absolute position information) of a point in which the marker 40 is formed, or relative coordinate information calculated based on the origin when a specific point in the autonomous driving space is taken as the origin. When the marker 40 adjacent to the vehicle 10 is recognized by the measuring device 20, the ID and/or position information of each marker 40 is identified in real time by the controller 30.

Depending on the nature of the marker 40, the marker 40 may include full map information of the autonomous driving space. The map information may be two-dimensional map information, and the map information includes coordinates of a specific point, an entrance, an exit, and general obstacles that serve as reference points of the autonomous driving space. In some cases, the map information may include only the total area (shape) information of the autonomous driving space. Detailed information of the map, that is, detailed information of the autonomous driving space, may be filled by the measuring device 20 measuring the surrounding space according to the movement of the vehicle 10.

On the other hand, when the minimum communication environment is formed in the autonomous driving space, the controller 30 may transmit the recognized unique numbering of each marker 40 to a server 100 through a communicator 60, and the server 100 may transmit coordinates corresponding to the corresponding unique numbering value to the controller 30. Meanwhile, at least one of the markers 40 may include an address and a link for downloading the full map information of the autonomous driving space, and the controller 30 may receive, from the server 100, the full map information downloaded through the communicator 60.

In summary, the markers 40 include information related to at least one of the following types of information: coordinate information (absolute or relative coordinates) of the place in which the markers 40 are formed, ID information of each marker, map information of the autonomous driving space, link information for downloading map information of the autonomous driving space, link information for obtaining coordinate information of the markers, individual parking space information around the markers, spatial coordinate area information on the area in which the vehicle 10 may move around the markers, spatial coordinate area information on the area in which the vehicle 10 may not move around the markers, and advertisement information. In addition, the markers may further include information for autonomous driving or other additional information.

FIG. 1 illustrates a vehicle 10 moving in an autonomous driving space. The vehicle 10 may measure a surrounding space through the measuring device 20 and recognize a marker 40 adjacent thereto. Surrounding space information measured by the measuring device 20 and identification information recognized from the marker 40 are stored in the controller 30. The measuring device 20 recognizes the spatial information and the marker 40 in real time.

The spatial information corresponds to image information of the surrounding space having the position of the measuring device 20 as the zero point. The spatial information measured by the measuring device 20 is accumulated as the car moves and is stored in the controller 30, and the accumulated spatial information is formed as map information in the form of an image.

ID information and/or coordinate information of the marker 40 may be computed based on the identification information recognized from the marker 40 and stored in the controller 30. In addition, relative position information of the vehicle 10 may be obtained based on the marker 40. The obtained relative position information may be stored in the controller 30, and the relative position information may be superimposed on the map information. Through the coordinate information of the marker 40 and the relative position information of the vehicle 10, relative coordinate information may be combined with the full map information in the form of an image.

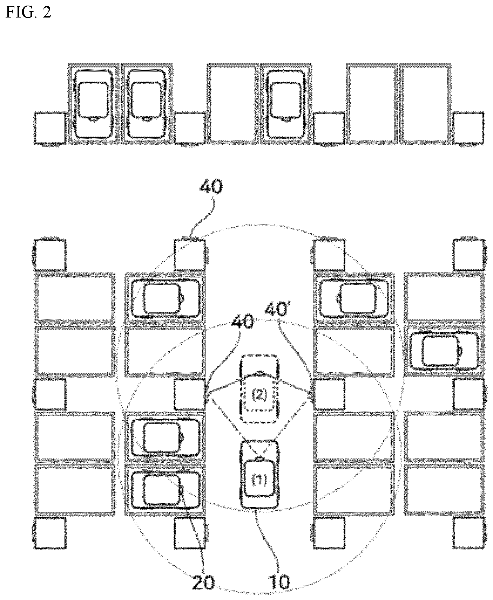

FIG. 2 illustrates the vehicle 10 of FIG. 1 moved a predetermined distance. As the vehicle 10 moves from a position (1) to a position (2), spatial information is accumulated, causing the map information to become larger. In addition, all of the markers 40 located in a measurable range of the measuring device 20 are recognized and the recognized markers are stored in the controller 30.

Since the positions of the markers 40 are fixed, relative position information of the vehicle 10 continuously changes according to the movement of the vehicle 10. That is, through the varying amount of change of relative position information, vector information of the vehicle 10 may be computed. The computed vector information is information required when setting a route for the vehicle 10 to most efficiently move to a destination during autonomous driving.

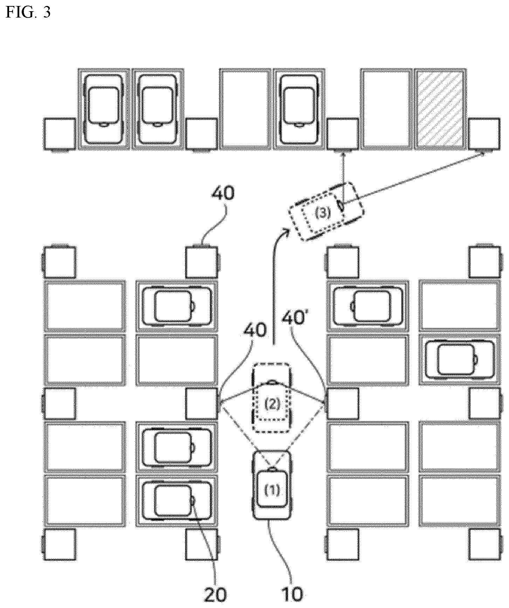

FIG. 3 illustrates the vehicle 10 that moves toward the destination. Through the position (1) and the position (2), position information, vector information, and spatial information of the vehicle 10 may all be obtained, and based on the obtained information, comprehensive position information may be generated.

Meanwhile, based on the accumulated spatial information and identification information obtained from two markers 40, spatial coordinate information may be generated. Through coordinate information about the two markers 40, i.e., two points, a virtual coordinate map may be generated, and the coordinate map may be combined with the accumulated spatial information. The spatial coordinate information is information that is a combination of spatial information and a coordinate map, and when the spatial coordinate information is derived, the position information of the vehicle 10 is easily derivable, and the minimum requirements for autonomous driving to the destination are provided.

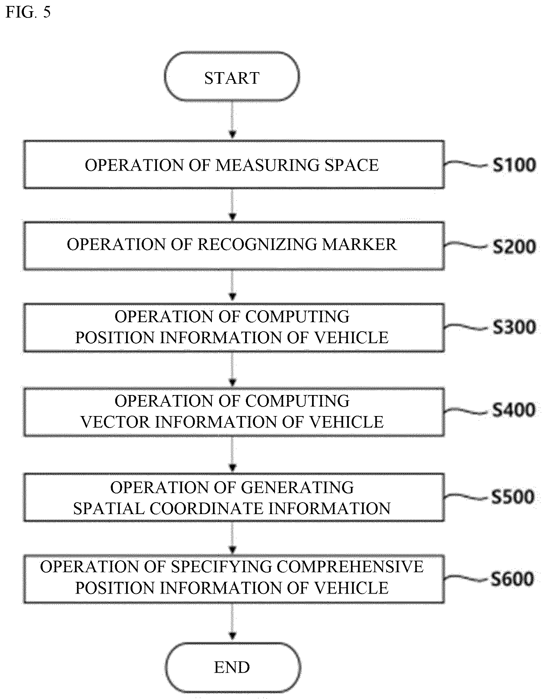

For example, upon obtaining destination information (coordinates) provided from the server, autonomous driving of the vehicle 10 may be performed based on spatial coordinate information and comprehensive position information. Detailed operations for autonomous driving will be described with reference to FIGS. 5 to 11.

FIGS. 5 to 11 illustrate specific operations of a position recognition method according to an embodiment of the present invention, showing an example in which the position of a vehicle is identified through each operation and accordingly autonomous driving is performed.

FIG. 5 illustrates general operations of a position recognition method according to an embodiment of the present invention. Specifically, the position recognition method includes an operation S100 of measuring a space around the vehicle 10 through the measuring device 20, an operation S200 of recognizing one or more markers 40 through the measuring device 20, an operation S300 of computing position information of the vehicle 10, and an operation S500 of specifying comprehensive position information of the vehicle 10.

Additionally, the position recognition method according to the embodiment of the present invention may further include an operation S400 of computing vector information of the vehicle 10 and an operation S500 of generating spatial coordinate information.

The operation S100 of measuring the space is an operation of identifying the topography, obstacles, cars, etc. of the surrounding space based on the vehicle 10. In the case of the embodiment of the present invention, surrounding spatial information may be obtained through the measuring device 20 provided in the vehicle 10, and the measuring device 20 may be an input device, such as a camera, or may be a LiDAR sensor.

The measuring device 20 may measure only a certain range of angles depending on the type, or may measure the entire 360 degrees at once. In addition, only a certain range of angles may be measured while the sensor is rotating, to thereby measure all directions.

In summary, the measuring device 20 may measure spatial information within a certain radius based on the vehicle 10, and the measured spatial information is stored in the controller 30. In addition, the size of the spatial information measured is subject to expansion according to the movement of the vehicle 10. That is, the spatial information is accumulatively stored in the controller 30. Meanwhile, the spatial information corresponds to image information to which coordinate values are not assigned. Therefore, in order to satisfy the requirements for autonomous driving, information other than the obtained spatial information is required.

The spatial information obtained in the operation S100 of measuring the space corresponds to image spatial information in which coordinate information is not determined because the coordinates of the vehicle 10 are always fixed to the zero point. Therefore, when using the obtained spatial information, autonomous driving at a level at which the vehicle 10 avoids obstacles can be performed, but autonomous driving to a destination cannot be performed without additional reference information, such as GPS information.

Therefore, in order to add coordinate information to the obtained spatial information, the operation S200 of recognizing the marker 40 formed in the vicinity through the measuring device 20 is required. The measuring device 20 may recognize a plurality of markers 40 located within the measuring radius, and each of the markers 40 may include various types of identification information. Various types of identification information obtained from the markers 40 are stored in the controller 30.

Each of the markers 40 may include the following information as described above. In detail, each of the markers may include ID information of each marker, coordinate information of the place in which the marker 40 is formed, map information of the autonomous driving space, link information for downloading the map information of the autonomous driving space, link information for obtaining the coordinate information of the marker, individual parking space information around the marker, spatial coordinate area information on the area in which the vehicle 10 can move around the marker, spatial coordinate area information on the area in which the vehicle 10 cannot move around the marker, and advertisement information.

In the case of the embodiment of the present invention, each marker 40 includes coordinate information of a place in which the marker 40 is formed. The coordinate information may be absolute coordinate information based on latitude and longitude or relative coordinate information when a specific point in the autonomous driving space is set as a zero point. Through the coordinate information of the marker 40 obtained through the measuring device 20, the coordinate information may be added to the spatial information.

Each of the markers 40 may include not only coordinate information but also direction information. When the marker 40 is formed on a specific plane, the marker 40 may have a direction vector. Through the coordinate information and direction information obtained from the marker 40, relative position information of the vehicle 10 with respect to the marker 40 may be obtained. The relative position information may be distance information and angle information between the measured marker 40 and the vehicle 10, and may be relative coordinate information of the vehicle 10 relative to the coordinate information of the marker 40.

After the position information of the vehicle 10 is generated through the identified relative position information of the vehicle, the position information is stored in the controller 30. The position information of the vehicle 10 may change in real time according to the movement of the vehicle 10 and may be combined with spatial information in the operation S500 of specifying the comprehensive position information.

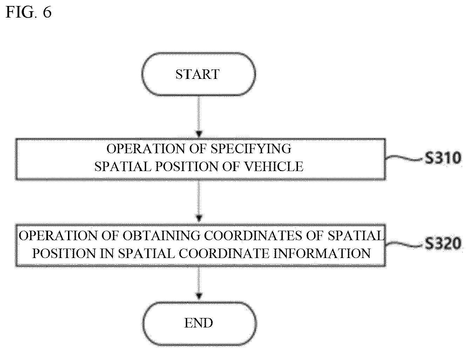

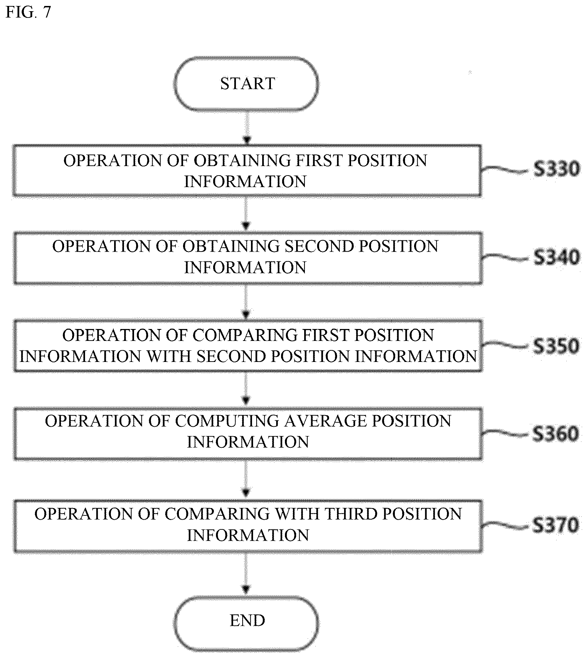

The operation S300 of computing the position information of the vehicle 10 may be performed in two methods. A method using spatial coordinate information is shown in FIG. 6, and a method using the markers 40 is shown in FIG. 7. Details thereof will be described below.

In the operation S400 of computing the vector information of the vehicle 10, the vector information may be obtained from the amount of change when the obtained position information of the vehicle 10 changes according to the movement of the vehicle 10. Vector information is required information to set the shortest distance or the most efficient route to the destination. A detailed description thereof will be provided below.

The operation S500 of generating spatial coordinate information is an operation of generating spatial coordinate information based on accumulated spatial information and identification information obtained from two markers 40. The spatial coordinate information is information that may replace high-capacity map information that is required for general autonomous driving, and corresponds to information obtained by assigning coordinate values to obtained image spatial information. The coordinate values to be assigned to image spatial information may be obtained from a coordinate map generated through identification information obtained from two or more markers 40.

On the other hand, when both absolute coordinate information and absolute direction information are obtainable from one marker 40 and coordinates of a specific point in the autonomous driving space are obtainable using the information obtained from the one marker 40, the coordinate values assigned to the spatial information may be generated through identification information obtained from the one marker 40. For example, when communication within the autonomous driving space is smooth, ID information of one of the markers 40 may be used to obtain absolute coordinate information and absolute direction information of the marker 40.

Spatial coordinate information is information that may be easily obtained even in an environment in which GPS does not operate or communication is not smooth, and includes only the minimum information required for autonomous driving.

The operation S600 of specifying the comprehensive position information corresponds to information combining the position information and/or vector information of the vehicle 10 with the spatial information or spatial coordinate information, and corresponds to an operation of specifying the current position and vector of the vehicle 10 to start autonomous driving to the destination.

A method of specifying the position of the vehicle 10 will be described using FIGS. 6 and 7.

In FIG. 6, it is assumed that spatial coordinate information is stored in the controller 30, and the figure is characterized in that the coordinates of the vehicle 10 are derivable from the spatial coordinate information. The operation S300 of computing the position information of the vehicle includes an operation S310 of specifying a spatial position of the vehicle 10 in spatial information and an operation S320 of obtaining the coordinates of the spatial position in the spatial coordinate information.

The operation S310 of specifying the spatial position of the vehicle refers to the position of the measuring device 20 in the spatial information measured by the measuring device 20. That is, the position may be understood as the zero coordinates of the measured spatial information. However, the spatial information is image information, and the coordinates of the measuring device 20 in the spatial information are always updated to the coordinates of the zero point even when the position of the vehicle 20 changes. Therefore, in order to specify objective coordinates of the measuring device 20, spatial coordinate information is required.

Since spatial coordinate information is information that is a combination of spatial information with coordinate map information, the coordinates of any point in the spatial coordinate information may be computed. That is, an operation of identifying a point in the spatial coordinate information that corresponds to the spatial position, which is extracted in the operation S310 of specifying the spatial position of the vehicle, corresponds to the operation S320 of obtaining the coordinates of the spatial position.

Meanwhile, as shown in FIG. 7, the position of the vehicle 10 may be specified through another method.

Referring to FIG. 7, the operation S300 of computing the position information of the vehicle may include an operation S330 of obtaining first position information, an operation S340 of obtaining second position information, and an operation S350 of comparing the first position information with the second position information.

Additionally, the operation S300 of computing the position information of the vehicle may further include an operation S360 of computing average position information and an operation S370 of comparing the average position information with third position information.

The operations of FIG. 7 may be performed independent of the operations of FIG. 6, and may be performed in parallel so that the final derivatives may be compared with each other.

The operation S330 of obtaining the first position information is an operation of obtaining coordinate information of the vehicle 10 from first identification information obtained from a first marker, and the operation S340 of obtaining the second position information (S340) is an operation of obtaining coordinate information of the vehicle 10 from second identification information obtained from a second marker. The first marker and the second marker correspond to some of the plurality of markers 40, and the first marker and the second marker are formed at separate positions. The terms "first" and "second" refer only to an arbitrary marker among a plurality of markers and do not refer to a marker at a specific position.

Unless there is an error in measurement, an error in a position information calculation algorithm, or damage to a marker, the first position information and the second position information may be the same within a certain error range. However, a difference between the first position information and the second position information may occur due to measurement errors, algorithm errors, marker damage, and the like. Such a case has a disastrous effect on autonomous driving, and there is a need to overcome this limitation.

To overcome this limitation, the operation S330 of computing the position information includes the operation S350 of comparing the first position information with the second position information. In the above operation, when the first position information and the second position information are the same within an error range, the operation S360 of computing the average position information of the two pieces of position information is performed to determine the position information of the vehicle 10, and when a mismatch of the first position information and the second position information is out of the set error range, the operation S370 of comparing third position information derived from a separate third marker with the first position information and the second position information is performed.

The third position information derived from the third marker different from the first marker and the second marker is compared with each of the first position information and the second position information, and for example, in response to a match of the first position information and the third position information within the error range and a mismatch of the second position information and the third position information out of the set error range, the controller 30 defines the second position information as incorrect information and stores the result.

Through a process like that shown in FIG. 7, the position information of the vehicle 10 may be precisely determined. When n-th position information is accumulated in the controller 30 in addition to the first position information and the second position information, the accuracy of the average position information may increase. Even with an error in information about a specific marker or damage to a specific marker, smooth autonomous driving may be performable.

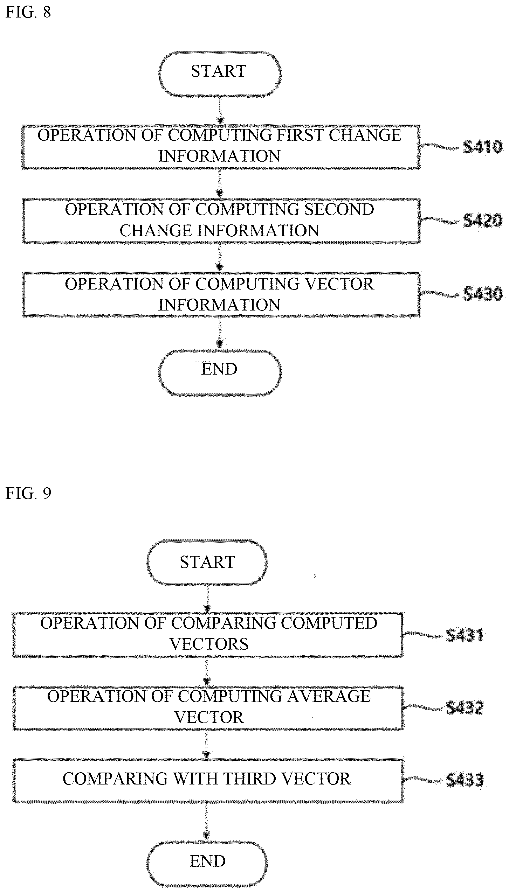

FIGS. 8 and 9 illustrate detailed operations of an operation S400 of computing vector information of a vehicle.

Specifically, the operation S400 of computing the vector information of the vehicle includes an operation S410 of computing first change information, an operation S420 of computing second change information, and an operation S430 of computing vector information.

The operation S410 of computing the first change information is an operation of measuring the amount of change of the first position information according to the movement of the vehicle 10, and the operation S420 of computing the second change information is an operation of measuring the amount of change of the second position information according to the movement of the vehicle 10.

The operation S430 of computing the vector information is an operation of generating vector information from the first change information and the second change information.

Specifically, a first vector may be derived through the amount of change of the first position information, and a second vector may be derived through the amount of change of the second position information. That is, the current moving direction of the vehicle 10 may be derived. The shortest route or the optimal route to the destination may be derived only when the current moving direction of the vehicle 10 is identified. A general autonomous driving space, such as a parking lot, is often a one-way area, and it is difficult to change the moving direction of the vehicle 10 along the same straight route. Accordingly, the current moving direction information of the vehicle 10 corresponds to important element information for smooth autonomous driving.

The operation S430 of computing the vector information includes an operation S431 of comparing computed vectors. When a result of comparison of the computed first and second vectors is that the two vectors are the same within an error range, the controller 30 computes the average vector of the first and second vectors and stores the computed average vector.

When the difference between the computed first and second vectors is out of the set error range, a third vector of the vehicle 10 computed by third change information being compared with each of the first vector and the second vector. The third change information may be obtained from a third marker.

The reason for comparing vectors computed from respective markers is the same as the reason for comparing position information. This is because, when the computed vector information differs for any of various reasons, such as algorithm errors, marker damage, and the like, smooth autonomous driving is hindered.

Through a process like that shown in FIG. 9, the vector information (moving direction information) of the vehicle 10 may be precisely determined. When an n-th vector is accumulated in the controller 30 in addition to the first and second vectors, the accuracy of the average vector information may increase. Even with an error in the information of a specific marker or damage to a specific marker, smooth autonomous driving may be performable.

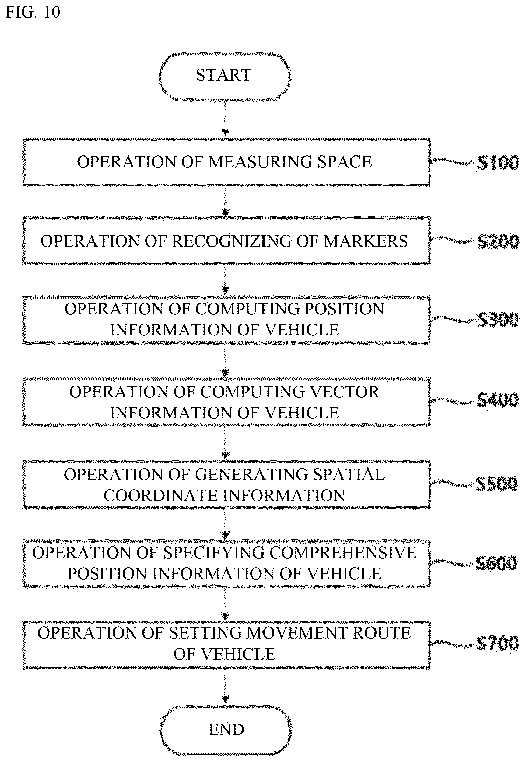

When the position information and the vector information of the vehicle 10 are determined, comprehensive position information may be specified, and based on the specified comprehensive position information, autonomous driving of the vehicle 10 to the destination may be implemented. FIG. 10 shows the entire flowchart further including an operation S700 of setting a movement route of the vehicle.

The comprehensive position information corresponds to information obtained by combining spatial information or spatial coordinate information with position information and/or vector information of the vehicle 10. As shown in FIG. 6, the position information of the vehicle 10 may be obtained from the spatial coordinate information. In order to derive the comprehensive position information, the methods of FIGS. 6 and 7 may be applied individually or may be applied in parallel.

The operation S700 of setting the route of the vehicle is an operation of manually or automatically setting or requesting a destination within the autonomous driving space. Specifically, the operation S700 of setting the route of the vehicle (S700) includes an operation S710 of requesting destination information, an operation S720 of transmitting destination coordinates, and an operation S730 of computing the shortest (optimal) route.

The operation S710 of requesting the destination information may include the controller 30 automatically requesting the destination information from the server, or the user requesting the destination information. The server 100 having received the request for the destination information may transmit the coordinates of the designated destination information to the controller 30.

The destination information may be an unspecified place as well as a specific place. For example, when the autonomous driving space is a parking space, the destination information may be a space in which parking is possible. However, spaces in which parking is possible change every moment, and thus correspond to an unspecified place.

The server 100 may obtain coordinate information for an empty parking space or information on a marker closest to the empty parking space by its own facility, and transmit the coordinate information or the marker information to the controller 30 through the communicator 60. The controller 30 having obtained the destination coordinate information may compute the shortest or optimal route based on the previously obtained comprehensive position information.

Meanwhile, in computing the shortest or optimal route, information about a spatial range in which the vehicle 10 cannot move is required. For example, in the case of a parking space, a space in which a car can park should not be present on the shortest route. The information about the spatial range in which the vehicle 10 cannot move may be included in each of the markers 40, or the corresponding information may be downloaded from the server 100. However, since the corresponding information may not be received from the server 100 in the case of a place in which communication is not smooth, the respective markers 40 may include the corresponding information.

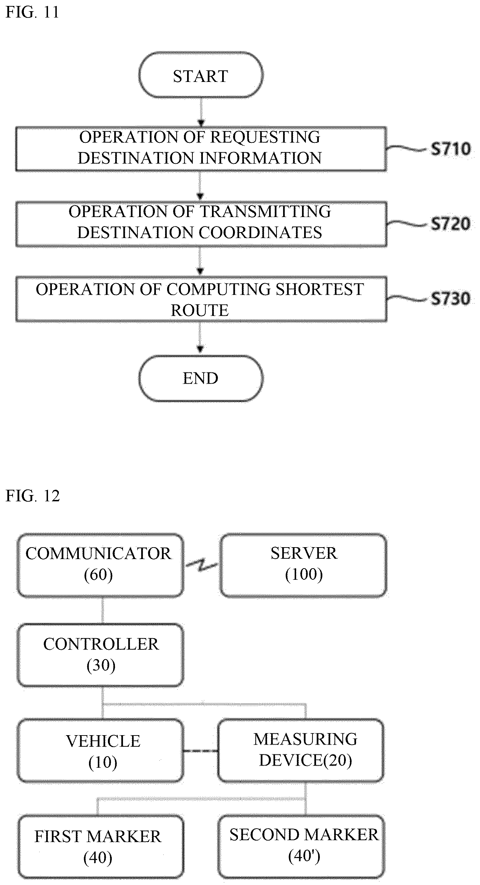

FIG. 12 illustrates a block diagram according to an embodiment of the present invention. The vehicle 10 includes the measuring device 20, the controller 30, and the communicator 60, and according to the movement of the vehicle 10, the measuring device 20 provided in the vehicle 10 may not only measure surrounding space information but also recognize information about a plurality of markers, such as a first marker 40 and a second marker 40'.

The controller 30 serves as a processor that stores and combines information obtained from the measuring device 20 and may correspond to a computer.

The communicator 60 is a component connected to the controller 30, and corresponds to a device used for the controller 30 to communicate with the server 100. The communicator 60 may transmit or receive information to or from the server 100 through various methods, such as short-distance wireless communication, e.g., wireless-fidelity (Wi-Fi), Long Term Evolution (LTE), 5G, Bluetooth, and beacon.

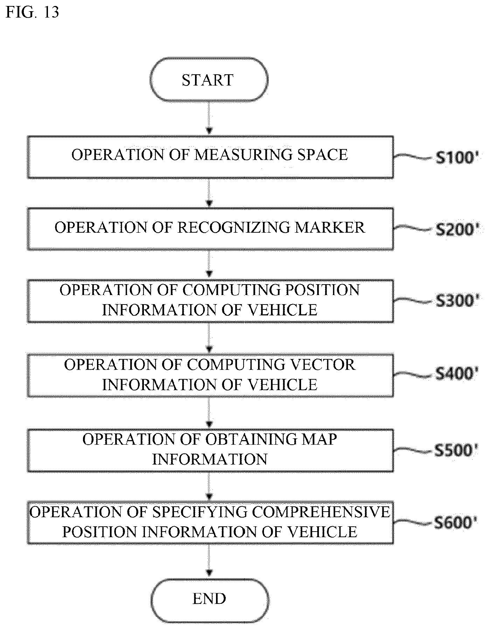

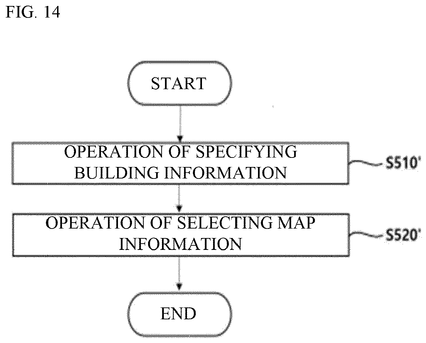

Meanwhile, FIGS. 13 and 14 illustrate a position recognition method according to another embodiment. However, some operations of the embodiment are the same as or similar to the operations shown in FIGS. 5 to 11. The position recognition method according to FIGS. 13 and 14 is mainly characterized by using the existing map information for autonomous driving.

The embodiment of the position recognition method shown in FIG. 13 includes an operation S100' of measuring a surrounding space of the vehicle 10, an operation S200' of recognizing a marker provided in the surrounding space, an operation S300' of computing position information of the vehicle, an operation S500' of obtaining map information, and an operation S600' of specifying comprehensive position information of the vehicle.

In addition, the embodiment of the position recognition method may further include an operation S400' of computing vector information of the vehicle.

In the operation S100' of measuring the surrounding space of the vehicle, the surrounding space is measured through one or more measuring devices 20 provided in the vehicle 10. The operation S100'of measuring the space is the same as or similar to the operation S100 of measuring the space shown in FIG. 5.

The operation S200' of recognizing the marker is an operation of recognizing one or more markers mounted in or attached to the surrounding space through the measuring device 20. The operation S200' of recognizing the marker is the same as or similar to the operation S200 of recognizing the marker shown in FIG. 5.

The operation S300' of computing the position information of the vehicle and the operation S400' of computing the vector information of the vehicle are also the same as or similar to the operation S300 of computing the position information of the vehicle and the operation S400 of computing the vector information of the vehicle as shown in FIG. 5, respectively.

The operation S600 of specifying the comprehensive position information of the vehicle is characterized by combining the position information computed in the operation S300' of computing the position information of the vehicle with the map information obtained in the operation S500' of obtaining the map information. For example, by combining the position information of the vehicle identified through marker recognition with the map information of the parking space in which the vehicle is moving, the exact position of the vehicle in the parking space may be identified, and the identified comprehensive position information forms basic data that enables the vehicle to autonomously drive to the final destination.

The operation S500' of acquiring the map information is an operation of acquiring map information of a space in which the vehicle 10 is moving, and the space in which the vehicle 10 moves according to the embodiment of the present invention is an underground parking lot in a building or a closed space. However, the present invention is not limited thereto and may be applied to an outdoor space.

The operation S500' of obtaining the map information includes an operation S510' of specifying building information and an operation S520' of selecting map information.

The operation S510' of specifying the building information is an operation of specifying building information including the final destination of the vehicle 10, the space in which the vehicle 10 is currently moving, or the space in which the autonomous driving of the vehicle 10 is required, and the building information may be position information with respect to a specific outdoor space.

The specifying of the building information may be performed by obtaining it from destination information input by a driver to a navigation application and the like, or by obtaining it from position information when a GPS signal is weakened or disconnected. In addition, the specifying of the building information may be achieved using address information or coordinate information of the building obtained through marker recognition of the vehicle 10.

By specifying the building information, map information for the space in which autonomous driving of the vehicle 10 is performed may be obtained. Planar map information for each building may be obtained from an internet portal site operated by the government or a database in which various maps are accumulated.

The operation of selecting map information is an operation of selecting map information matching the specified building information. First, in a case in which map information data of various buildings is stored in the controller 30, the controller 30 may search for the specified building information in a storage space and select required map information.

Second, map information of the specified building information may be downloaded from the server 100. The controller 30 may request map information matching the specified building information from the server 100, and the server 100 may transmit the requested map information to the controller 30 through the communicator 60. The server 100 may correspond to an Internet portal site operated by the government or various databases.

The operation S300' of computing the position information of the vehicle may include specifying the position of the vehicle 10 from one or more markers, and the operation S400' of computing the vector information of the vehicle may include specifying a vector of the vehicle 10 from one or more markers.

The comprehensive position information corresponds to information obtained by finally combining the computed position information and vector information of the vehicle 10 with the obtained map information. Based on the obtained comprehensive position information, the route of the vehicle may be set.

The operation S700' of setting the route of the vehicle is the same as or similar to the operation S700 of setting the route of the vehicle shown in FIG. 10.

Although exemplary embodiments of the present invention have been described in detail above with reference to the accompanying drawings, those of ordinary skill in the technical field to which the present invention pertains should be able to understand that various modifications and alterations may be made without departing from the technical spirit or essential features of the present invention. Therefore, it should be understood that the embodiments described above are illustrative in all respects rather than restrictive.

## Claims

1. A position recognition method comprising:
measuring a space in a first direction through one or more measuring devices provided in a vehicle;
recognizing a first marker through the measuring device;
computing first position information of the vehicle;
obtaining map information; and
specifying comprehensive position information of the vehicle,
wherein the first marker includes a coordinate value of the first marker,
the first position information is a coordinate value of the vehicle computed through the recognizing of the first marker, and
the specifying of the comprehensive position information includes combining the first position information of the vehicle with the map information.

2. The position recognition method of claim 1, wherein the obtaining of the map information includes:
specifying building information; and
selecting map information that matches the specified building information.

3. The position recognition method of claim 2, wherein the selecting of the map information includes:
requesting first map information matching the building information; and
receiving the first map information from a server.

4. The position recognition method of claim 2 or 3, wherein the specifying of the building information includes deriving destination information of the vehicle or obtaining address information of a building from the first marker or a second marker.

5. The position recognition method of claim 2 or 3, further comprising computing vector information of the vehicle,
wherein the computing of the vector information includes measuring an amount of change of the first position information to compute first vector information.

6. The position recognition method of claim 5, wherein the specifying of the comprehensive position information includes further combining the first vector information of the vehicle with the map information.

7. The position recognition method of claim 6, further comprising setting a route of the vehicle,
wherein the setting of the route of the vehicle includes setting a movement route of the vehicle based on the comprehensive position information.

8. The position recognition method of claim 7, wherein the setting of the route of the vehicle includes:
requesting information about a destination;
transmitting coordinates of the destination; and
computing a shortest route,
wherein the transmitting of the coordinates of the destination includes transmitting at least one of coordinate information of the destination and information on a marker closest to the destination.

9. The position recognition method of claim 5, further comprising:
recognizing a second marker through the measuring device; and
computing second position information of the vehicle,
wherein the computing of the vector information includes measuring an amount of change of the second position information to compute second vector information and calculating the vector information of the vehicle.

10. The position recognition method of claim 9, wherein the calculating of the vector information includes:
comparing the first vector information with the second vector information; and
computing average vector information of the first vector information and the second vector information.

11. The position recognition method of claim 9, wherein the calculating of the vector information includes comparing the first vector information with the second vector information, and when a difference between the first vector information and the second vector information is outside a set error range, comparing third vector information of the vehicle computed from third position information with the first vector information and the second vector information.

12. An autonomous driving system comprising:
a vehicle provided to be driven automatically or manually;
one or more measuring devices provided in the vehicle and configured to recognize a first marker through measurement of a space in a first direction; and
a controller,
wherein first position information obtained from the first marker is stored in the controller, and the controller generates comprehensive position information that is a combination of the first position information and obtained map information.
